# EUROPEAN PATENT SPECIFICATION

(11) **EP 3 632 869 B1**
(45) Date of publication and mention of the grant of the patent: **23.06.2021**
(21) Application number: 18809505.3
(22) Date of filing: 16.05.2018
(51) Int. Cl.: C03C 27/06, E06B 3/673, E06B 3/677, E06B 3/66

(54) **METHOD FOR PRODUCING GLASS PANEL UNIT, AND METHOD FOR PRODUCING GLASS WINDOW**
VERFAHREN ZUR HERSTELLUNG EINER GLASSCHEIBENEINHEIT UND VERFAHREN ZUR HERSTELLUNG EINES GLASFENSTERS
PROCÉDÉ DE PRODUCTION D'UNITÉ DE PANNEAU EN VERRE ET PROCÉDÉ DE PRODUCTION DE FENÊTRE EN VERRE

(30) Priority: 31.05.2017 JP 2017108704
(43) Date of publication of application: 08.04.2020
(73) Proprietor: Panasonic Intellectual Property Management Co., Ltd., Osaka-shi, Osaka 540-6207 (JP)
(72) Inventor: SHIMIZU, Takeshi, Osaka-shi, Osaka 540-6207 (JP); ABE, Hiroyuki, Osaka-shi, Osaka 540-6207 (JP); NONAKA, Masataka, Osaka-shi, Osaka 540-6207 (JP); URIU, Eiichi, Osaka-shi, Osaka 540-6207 (JP); HASEGAWA, Kazuya, Osaka-shi, Osaka 540-6207 (JP); ISHIBASHI, Tasuku, Osaka-shi, Osaka 540-6207 (JP); ISHIKAWA, Haruhiko, Osaka-shi, Osaka 540-6207 (JP)
(74) Representative: Müller-Boré & Partner Patentanwälte PartG mbB
(86) International application number: PCT/JP2018/018833
(87) International publication number: WO 2018/221208

(56) References cited:
- EP-A1- 1 473 975
- WO-A1-2014/092015
- WO-A1-2017/056416
- WO-A2-2015/191527
- JP-A- 2005 231 930
- TW-A- 201 611 978

## Description

### Technical Field

The present disclosure relates to a method for manufacturing a glass panel unit and a method for manufacturing a glass window.

### Background Art

A method for manufacturing a glass panel unit with excellent thermal insulation properties by bonding respective peripheral edges of two glass panes together has often been carried out in the known art. Specifically, according to the known method, two glass panes with substantially the same contour are provided, and have their respective peripheral edges hermetically bonded together with a plurality of pillars interposed between the two glass panes to create an internal space between them. Then, the internal space is sealed so as to be kept evacuated (see, for example, Patent Literature 1).

According to the known manufacturing method, two glass panes, conforming to the specifications (including dimensions) of a glass panel unit as a final product, need to be provided, and respective manufacturing process steps need to be performed using equipment matching those two glass panes in terms of dimensions. Such a method therefore requires dedicated equipment to manufacture glass panel units of each particular size, thus making it difficult to cut down the overall manufacturing cost.

### Citation List

### Patent Literature

Patent Literature JP 2005-231930 A Patent Literature 2: WO 2017/056416 A1 discloses a method according to the preamble of claim 1.

### Summary of Invention

It is therefore an object of the present disclosure to manufacture glass panel units of various sizes and glass windows of various sizes with the manufacturing cost cut down.

A glass panel unit manufacturing method according to an implementation of the present disclosure includes a providing step, a pillar arrangement step, a bonding step, a sealing step, and a cutting step. The providing step includes providing a first substrate and a second substrate. The first substrate includes a first glass pane. The second substrate includes a second glass pane and has a smaller contour than the first substrate. The pillar arrangement step includes arranging a plurality of pillars on the first substrate. The bonding step includes hermetically bonding peripheral edges of the second substrate onto the first substrate while arranging the second substrate over the first substrate and then interposing the plurality of pillars between the second substrate and the first substrate. The sealing step includes sealing up an internal space created between the second substrate and the first substrate, while keeping the internal space evacuated. The cutting step includes cutting the first substrate to the contour of the second substrate.

A glass window manufacturing method according to another implementation of the present disclosure includes the steps of: manufacturing a glass panel unit by the glass panel unit manufacturing method described above; and fitting the glass panel unit into a frame.

### Brief Description of Drawings

FIG. 1 is a schematic perspective view illustrating a process step of a glass panel unit manufacturing method according to a first exemplary embodiment;
FIG. 2 is a schematic plan view illustrating another process step of the manufacturing method;
FIG. 3 is a cross-sectional view thereof taken along the plane A-A shown in FIG. 2;
FIG. 4 is a schematic plan view illustrating a cutting step of the manufacturing method;
FIG. 5 is a schematic perspective view illustrating a process step of a glass panel unit manufacturing method according to a second exemplary embodiment;
FIG. 6 is a schematic plan view illustrating another process step of the manufacturing method;
FIG. 7A is a schematic plan view of a glass panel unit manufactured by the manufacturing method;
FIG. 7B is a cross-sectional view thereof taken along the plane B-B shown in FIG. 7A;
FIG. 8 is a schematic plan view of a glass panel unit manufactured by a glass panel unit manufacturing method according to a third exemplary embodiment;
FIG. 9 is a cross-sectional view thereof taken along the plane C-C shown in FIG. 8; and
FIG. 10 is a schematic plan view of a glass window including a glass panel unit manufactured by the glass panel unit manufacturing method according to the first embodiment.

### Description of Embodiments

### [Glass panel unit]

### (First embodiment)

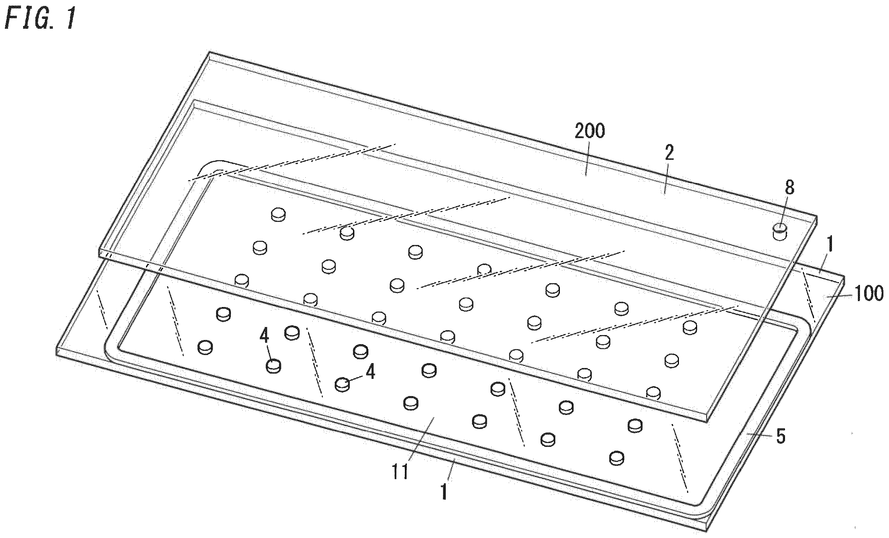

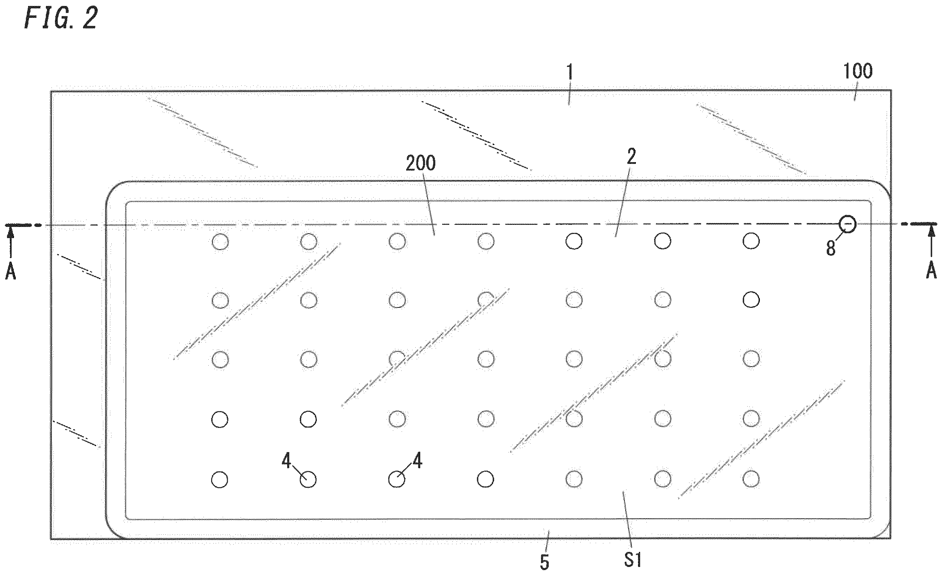

A glass panel unit manufacturing method according to a first exemplary embodiment (hereinafter referred to as a "first manufacturing method") will be described with reference to FIGS. 1-4.

The first manufacturing method includes a providing step, a pillar arrangement step, a bonding step, a sealing step, and a cutting step. These process steps will be described sequentially.

First, the providing step will be described.

The providing step includes providing a first substrate 1 having a flat plate shape and a second substrate 2 having a flat plate shape and a smaller contour than the first substrate 1.

The first substrate 1 includes a first glass pane 100 having a flat plate shape. One surface 11, defined in a thickness direction, of the first substrate 1 is one surface, also defined in the thickness direction, of the first glass pane 100.

At least part of the first substrate 1 may be the first glass pane 100. The first substrate 1 is transparent as a whole in this embodiment, but may be semi-transparent or opaque as well.

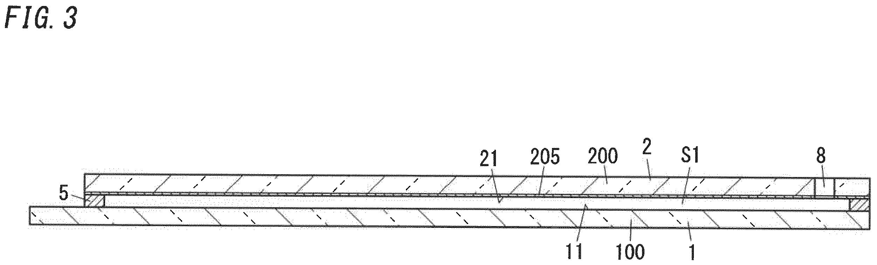

The second substrate 2 includes a second glass pane 200 having a flat plate shape and a low-emissivity (low-E) film 205 covering a first side, defined in the thickness direction, of the second glass pane 200 (see FIG. 3). The second substrate 2 may include, instead of the low-emissivity film 205 with low emissivity, a film with any other physical property as well. Alternatively, a film with an appropriate physical property may be provided on a second side, also defined in the thickness direction and located opposite from the first side, of the second glass pane 200. Still alternatively, a film with an appropriate physical property may be provided on each of the first and second sides in the thickness direction of the second glass pane 200.

One surface 21, defined in the thickness direction, of the second substrate 2 is the surface of the low-emissivity film 205. If no low-emissivity film 205 or any other film is provided for the second substrate 2, the one surface 21 of the second substrate 2 is one surface, defined in the thickness direction, of the second glass pane 200.

At least part of the second substrate 2 may be the second glass pane 200. The second substrate 2 is transparent as a whole in this embodiment, but may be semi-transparent or opaque as well.

An evacuation port 8 is cut through the second substrate 2 in the thickness direction. The evacuation port 8 is provided to penetrate through the second glass pane 200 and the low-emissivity film 205. According to the first manufacturing method, a single evacuation port 8 is cut through the second substrate 2. However, this is only an example and should not be construed as limiting. Alternatively, a plurality of evacuation ports 8 may be cut through the second substrate 2 or a single or a plurality of evacuation ports 8 may be cut through the first substrate 1.

Next, the pillar arrangement step will be described.

The pillar arrangement step includes arranging a plurality of pillars 4 in a predetermined pattern on the one surface 11 of the first substrate 1 (see FIG. 1 and other drawings).

The pillars 4 are members for keeping a predetermined gap distance between the first substrate 1 and the second substrate 2 and are arranged over the one surface 11 by any appropriate means such as picking.

Note that FIGS. 1-4 illustrate the first manufacturing method only schematically, and the dimensions and shape of the respective pillars 4 and the spacing between adjacent pillars 4 are different from actual ones. Likewise, the respective thicknesses of the first substrate 1 and second substrate 2 and the gap distance left between the first and second substrates 1 and 2 are also different from actual ones.

Next, the bonding step will be described.

The bonding step includes hermetically bonding peripheral edges of the second substrate 2 onto the first substrate 1 with a sealing material 5 in a frame shape while arranging the second substrate 2 over the first substrate 1 and then interposing the plurality of pillars 4 between the second substrate 2 and the first substrate 1.

The sealing material 5 may be applied onto the one surface 11 of the first substrate 1 either before or after the plurality of pillars 4 are arranged on the first substrate 1. Alternatively, the sealing material 5 may be applied while the plurality of pillars 4 are being arranged.

Alternatively, the sealing material 5 may also be applied to the one surface 21 of the second substrate 2. Still alternatively, the sealing material 5 may also be applied onto the gap between the first and second substrates 1 and 2 that are arranged to face each other with the plurality of pillars 4 interposed between them.

The bonding step includes loading, into a furnace, the first and second substrates 1 and 2 that interpose the plurality of pillars 4 and the sealing material 5 between them, thereby heating the entire assembly. This allows the sealing material 5 to be melted once in the furnace, thus hermetically bonding the peripheral edges of the second substrate 2 onto the first substrate 1 with the sealing material 5.

Between the first and second substrates 1 and 2 thus bonded together, created is an internal space S1 that is surrounded hermetically with the sealing material 5. At this stage, the internal space S1 communicates with the external space through the evacuation port 8 (see FIG. 3).

Next, the sealing step will be described.

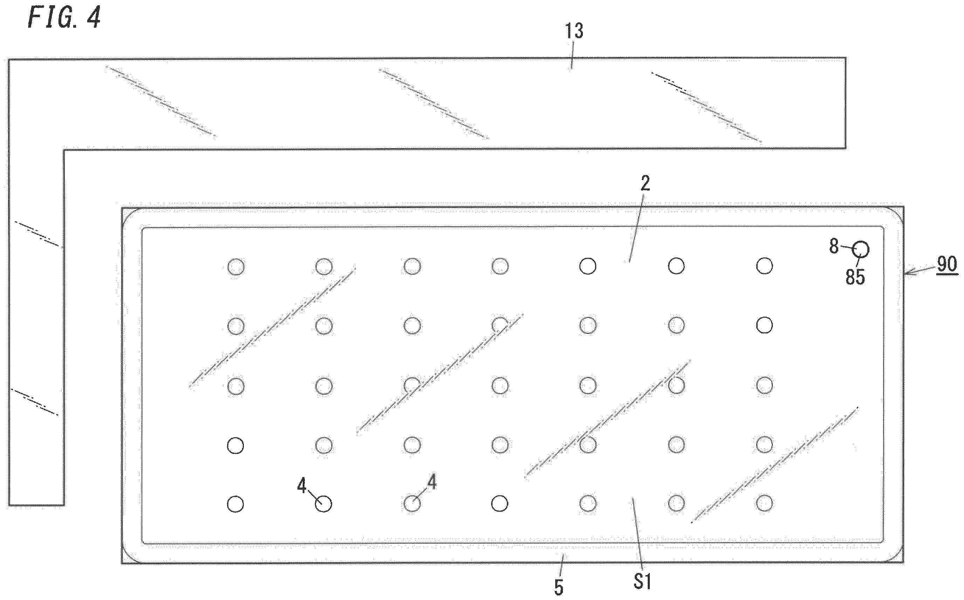

The sealing step includes evacuating the internal space S1 to a predetermined degree of vacuum (which may be 0.1 Pa or less, for example) through the evacuation port 8 and sealing the internal space S1 up while keeping the internal space S1 evacuated. Specifically, an evacuation head (not shown) may be connected to the second substrate 2 so as to communicate hermetically with the evacuation port 8, and then the evacuation port 8 may be sealed up with the internal space S1 kept evacuated through the evacuation head. According to this first manufacturing method, the evacuation port 8 is sealed up by filling the evacuation port 8 with a sealing material 85 (see FIG. 4). However, this is only an example and should not be construed as limiting. Alternatively, the evacuation port 8 may be sealed up by any other means as well.

Next, the cutting step will be described.

The cutting step includes cutting the first substrate 1 to the contour of the second substrate 2. The first substrate 1 may be cut with any appropriate means such as a glass cutter, a water jet, or a laser cutter. The first substrate 1 has a contour that is larger by one step than that of the second substrate 2. Thus, cutting off a redundant portion 13 from the first substrate 1 through this cutting step allows a glass panel unit 90 such as the one shown in FIG. 4 to be obtained.

The redundant portion 13 is suitably reused. According to the first manufacturing method, the first substrate 1 consists of the first glass pane 100 with no low-emissivity film or any other additional film, and the redundant portion 13 forms part of the first glass pane 100. Thus, the first manufacturing method facilitates the reuse of the redundant portion 13, which is beneficial.

The first manufacturing method described above cuts down the manufacturing cost by reducing the size of the first substrate 1 to a standardized one during the manufacturing process. That is to say, according to the first manufacturing method described above, equipment conforming to the first substrate 1 of the standardized size may be used in the respective process steps (namely, the pillar arrangement step, the bonding step, and the sealing step) to be performed before the step of cutting the first substrate 1. This allows glass panel units 90 of various sizes to be manufactured using the same equipment in common.

In addition, the cutting step of the first manufacturing method requires cutting the first substrate 1 alone. This facilitates the cutting work, compared to cutting both of the first and second substrates 1 and 2.

### (Second embodiment)

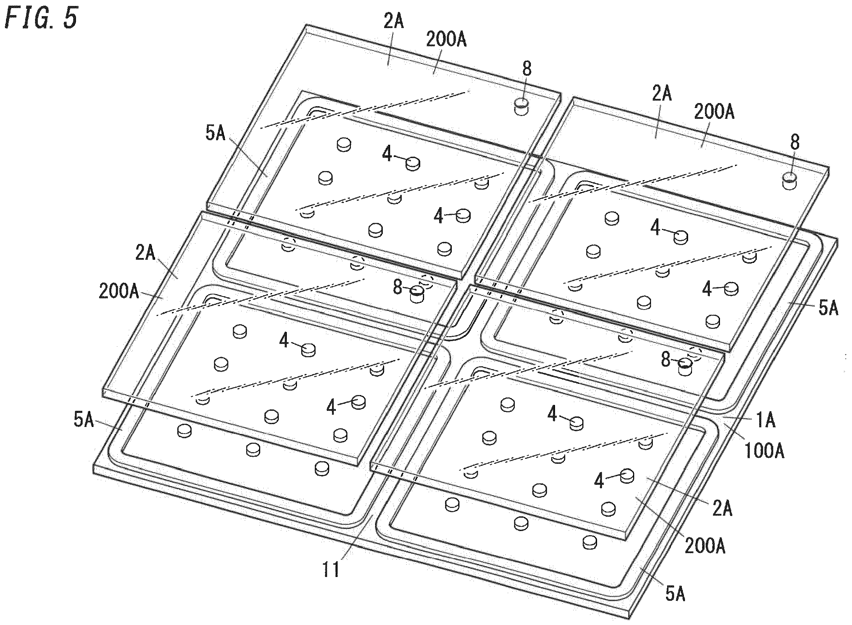

A glass panel unit manufacturing method according to a second exemplary embodiment (hereinafter referred to as a "second manufacturing method") will be described with reference to FIGS. 5, 6, 7A, and 7B. In the following description, any constituent element, used in this second manufacturing method and having the same function as a counterpart used in the first manufacturing method described above, will be designated by the same reference numeral as that counterpart's.

Just like the first manufacturing method, the second manufacturing method also includes a providing step, a pillar arrangement step, a bonding step, a sealing step, and a cutting step.

The providing step includes providing a first substrate 1A having a flat plate shape and a plurality of second substrates 2A, each having a flat plate shape and a smaller contour than the first substrate 1. In this embodiment, the plurality of second substrates 2A includes four second substrates 2A.

As in the first manufacturing method, the first substrate 1A includes a first glass pane 100A having a flat plate shape. One surface 11, defined in a thickness direction, of the first substrate 1A is one surface, also defined in the thickness direction, of the first glass pane 100A. The first substrate 1A is transparent as a whole in this embodiment, but may be semi-transparent or opaque as well.

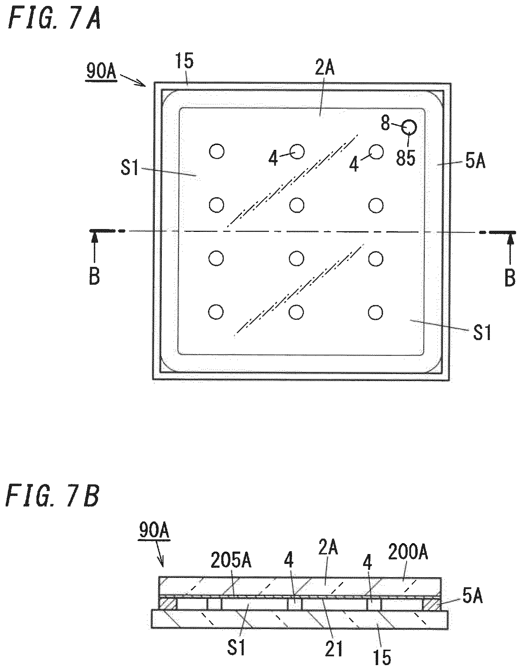

Each of the plurality of second substrates 2A includes a second glass pane 200A having a flat plate shape and a low-emissivity film 205A covering a first side, defined in the thickness direction, of the second glass pane 200A (see FIG. 7B). Each of the plurality of second substrates 2A may have, instead of the low-emissivity film 205A with low emissivity, a film with any other physical property as well. Alternatively, in each of the plurality of second substrates 2A, a film with an appropriate physical property may be provided on a second side, also defined in the thickness direction and located opposite from the first side, of the second glass pane 200A. Still alternatively, a film with an appropriate physical property may be provided on each of the first and second sides in the thickness direction of the second glass pane 200A.

Optionally, the plurality of second substrates 2A may include at least one second substrate 2A including the low-emissivity film 205A and at least one second substrate 2A including no low-emissivity film 205A. Each of the plurality of second substrates 2A is transparent as a whole in this embodiment, but may be semi-transparent or opaque as well.

An evacuation port 8 is cut through each of the plurality of second substrates 2A to penetrate through the second glass pane 200A and the low-emissivity film 205A. According to the second manufacturing method, a single evacuation port 8 is cut through each of the plurality of second substrates 2A. However, this is only an example and should not be construed as limiting. Alternatively, a plurality of evacuation ports 8 may be cut through each of the plurality of second substrates 2A.

Optionally, a plurality of evacuation ports 8 may be cut through the first substrate 1A. In that case, a portion, facing one-to-one an associated one of the second substrates 2A, of the first substrate 1A has either a single evacuation port 8 or a plurality of evacuation ports 8.

The pillar arrangement step includes arranging a plurality of pillars 4 in a predetermined pattern on each region, facing one-to-one an associated one of the second substrates 2A, of the one surface 11 of the first substrate 1A (see FIG. 5 and other drawings).

Note that FIGS. 5, 6, 7A, and 7B illustrate the second manufacturing method only schematically, and the dimensions and shape of the respective pillars 4 and the spacing between adjacent pillars 4 are different from actual ones. Likewise, the respective thicknesses of the first substrate 1A and the plurality of second substrates 2A and the gap distance left between the first substrate 1A and each of the plurality of second substrates 2A are different from actual ones.

The bonding step includes hermetically bonding peripheral edges of each of the plurality of second substrates 2A onto the first substrate 1A with a sealing material 5A in a frame shape while arranging the plurality of second substrates 2A over the first substrate 1A and then interposing the plurality of pillars 4 between each of the plurality of second substrate 2A and the first substrate 1A.

The sealing material 5A may be applied onto the one surface 11 of the first substrate 1A either before or after the plurality of pillars 4 are arranged on the first substrate 1A. Alternatively, the sealing material 5A may be applied while the plurality of pillars 4 are being arranged. Alternatively, the sealing material 5A may also be applied to the one surface 21 of each of the plurality of second substrates 2A.

The bonding step includes loading, into a furnace, the first substrate 1A and the plurality of second substrates 2A that interpose the plurality of pillars 4 and the sealing material 5 between them, thereby heating the entire assembly. This allows the peripheral edges of each of the plurality of second substrates 2A to be bonded hermetically onto the first substrate 1A with the sealing material 5A.

Between the first substrate 1A and each of the plurality of second substrates 2A bonded together, created is an internal space S1 that is surrounded hermetically with the sealing material 5A.

At a point in time when the bonding step is finished, the internal space S1 communicates with the external space through the evacuation port 8.

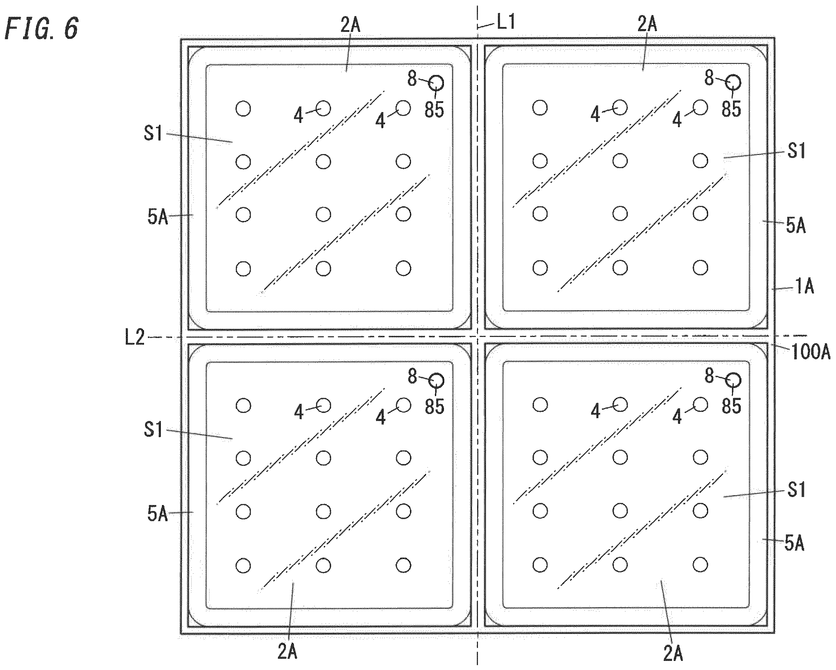

The sealing step includes evacuating the internal space S1 between each of the plurality of second substrates 2A and the first substrate 1A to a predetermined degree of vacuum (which may be 0.1 Pa or less, for example) through the evacuation port 8 and sealing the internal space S1 while keeping the internal space S1 evacuated. Specifically, an evacuation head (not shown) may be connected to each of the plurality of second substrates 2A so as to communicate hermetically with the evacuation port 8, and then the evacuation port 8 may be sealed up with the internal space S1 kept evacuated through the evacuation head. According to this second manufacturing method, each of the evacuation ports 8 is sealed up by filling the evacuation port 8 with a sealing material 85 (see FIG. 6). However, this is only an example and should not be construed as limiting. Alternatively, some or all of the evacuation ports 8 may be sealed up by any other means as well.

At a point in time when the sealing step is finished, a narrow gap is left between two adjacent ones of the plurality of sealing materials 5A arranged on the one surface 11 of the first substrate 1A. Likewise, a narrow gap is also left between two adjacent ones of the plurality of second substrates 2A facing the first substrate 1A.

The cutting step includes cutting the first substrate 1A to the respective contours of the plurality of second substrates 2A. The first substrate 1A may be cut with any appropriate means such as a glass cutter, a water jet, or a laser cutter.

According to the second manufacturing method, the four second substrates 2A are arranged in matrix with a narrow gap left between themselves. Thus, cutting the first substrate 1A along cutting lines L1 and L2, each passing through the gap between two adjacent ones out of the four second substrates 2A, allows four glass panel units 90A, each having the configuration shown in FIG. 7A, to be obtained.

That is to say, each of the plurality of glass panel units 90A manufactured by the second manufacturing method includes: one of plurality of (e.g., four in this embodiment) sections (hereinafter referred to as a "divided substrate 15") formed by dividing the first substrate 1A; an associated second substrate 2A facing the divided substrate 15; the plurality of pillars 4; and the sealing material 5A in the frame shape. The plurality of pillars 4 are interposed between the divided substrate 15 and the second substrate 2A to keep a predetermined gap distance between the divided substrate 15 and the second substrate 2A. The sealing material 5A is bonded hermetically onto the divided substrate 15 and the second substrate 2A so as to surround the plurality of pillars 4 over the entire periphery. The internal space S1 surrounded with the divided substrate 15, the second substrate 2A, and the sealing material 5A is an evacuated space that has been evacuated to a predetermined degree of vacuum.

According to the second manufacturing method, the first substrate 1A leaves no redundant portion (that is a portion not to be included in the glass panel unit 90A as a final product). However, some redundant portion could be left. In that case, the redundant portion of the first substrate 1A is suitably reused. According to the second manufacturing method, the first substrate 1A also consists of the first glass pane 100A with no low-emissivity film, thus facilitating the reuse of the redundant portion as well.

The second manufacturing method described above allows the size of the first substrate 1A to be reduced to a standardized one during the manufacturing process, thus cutting down the manufacturing cost. That is to say, according to the second manufacturing method, equipment conforming to the first substrate 1A of the standardized size may be used in the respective process steps (namely, the pillar arrangement step, the bonding step, and the sealing step) to be performed before the first substrate 1A is cut and segmented into multiple glass panel units. This allows multiple glass panel units 90A of various sizes to be manufactured efficiently using the same equipment in common.

In addition, in the cutting step of the second manufacturing method, just the first substrate 1A needs to be cut and segmented into multiple glass panel units, thus facilitating the cutting work compared to cutting both the first substrate 1A and the second substrates 2A.

### (Third embodiment)

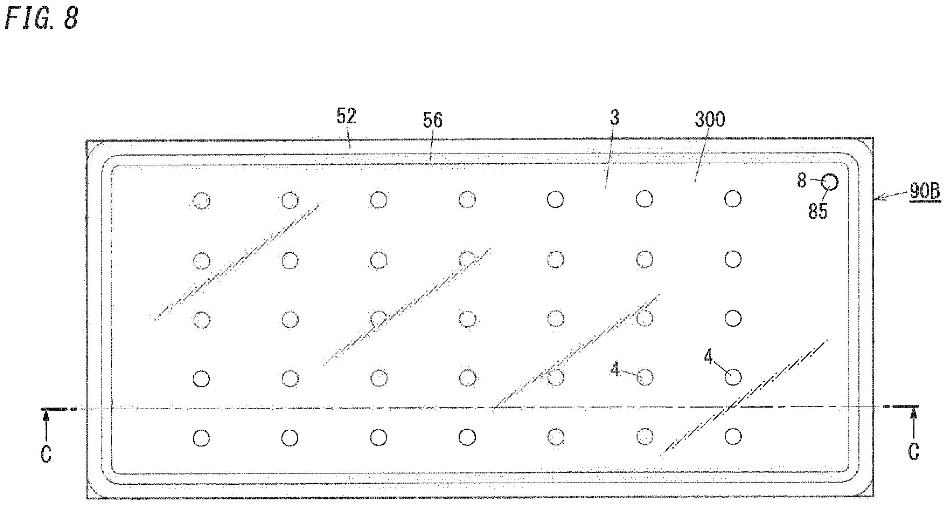

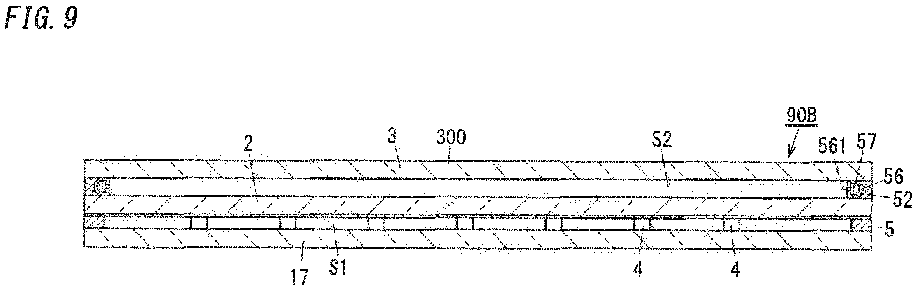

A glass panel unit manufacturing method according to a third exemplary embodiment (hereinafter referred to as a "third manufacturing method") will be described with reference to FIGS. 8 and 9.

The third manufacturing method includes not only all of the process steps of the first manufacturing method but also a second bonding step as well. The second bonding step is performed after the cutting step has been performed. In the following description, any constituent element, used in this third manufacturing method and having the same function as a counterpart used in the first manufacturing method described above, will be designated by the same reference numeral as that counterpart's.

The second bonding step includes bonding a third substrate 3 onto the second substrate 2 with a sealing material 52 in a frame shape.

The third substrate 3 includes a third glass pane 300. Note that at least part of the third substrate 3 needs to be the third glass pane 300, and a film with an appropriate physical property may be formed on either or both sides, in the thickness direction, of the third glass pane 300. The third substrate 3 is transparent as a whole in this embodiment, but may be semi-transparent or opaque as well.

The sealing material 52 hermetically bonds the respective entire peripheral edges of the second substrate 2 and third substrate 3, thus creating a hermetically sealed space S2 between the respective counter surfaces of the second and third substrates 2 and 3.

The third substrate 3 may face either the second substrate 2 or a major part 17, excluding the redundant portion 13, of the first substrate 1. Although not shown, if the third substrate 3 faces the major part 17 of the first substrate 1, the sealing material 52 is bonded onto the respective peripheral edges of the major part 17 and the third substrate 3, thus creating the hermetically sealed space S2 between the major part 17 and the third substrate 3.

As shown in FIG. 9, a spacer 56 in a frame shape is arranged inside of the sealing material 52. The spacer 56 has a hollow portion at least partially along its periphery. The hollow portion of the spacer 56 is filled with a desiccant 57.

The spacer 56 may be made of a metal such as aluminum, and has through holes 561 cut through the inner peripheral portion thereof. The hollow portion of the spacer 56 communicates with the space S2 through the through holes 561. The desiccant 57 may be a silica gel, for example. The sealing material 52 is suitably made of a highly airtight resin such as silicone resin or butyl rubber.

The space S2 is hermetically sealed by the second substrate 2 (or the major part 17 of the first substrate 1), the third substrate 3, and the sealing material 52. The space S2 is filled with a dry gas. Examples of the dry gas include a dry rare gas such as argon gas and dry air. The dry air includes the air that is dried by the desiccant 57 after having been introduced airtight into the space S2.

In the glass panel unit 90B manufactured by the third manufacturing method, the internal space S1 that has been evacuated to a predetermined degree of vacuum and the space S2 filled with the dry gas are interposed between the third substrate 3 and the major part 17 of the first substrate 1 (or the second substrate 2) that are located at both ends in the thickness direction. Thus, the glass panel unit 90B manufactured by the third manufacturing method exhibits further improved thermal insulation properties.

In the embodiment described above, the third manufacturing method includes not only all process steps of the first manufacturing method but also the second bonding step. However, this is only an example and should not be construed as limiting. Alternatively, the third manufacturing method may also include not only all process steps of the second manufacturing method but also the second bonding step as well. Even in the latter case, the thermal insulation properties of the glass panel unit 90B are also further improvable by hermetically bonding the third substrate 3 onto the second substrate 2 (or the divided substrate 15) with the sealing material 52 after the cutting step has been performed.

### [Glass window]

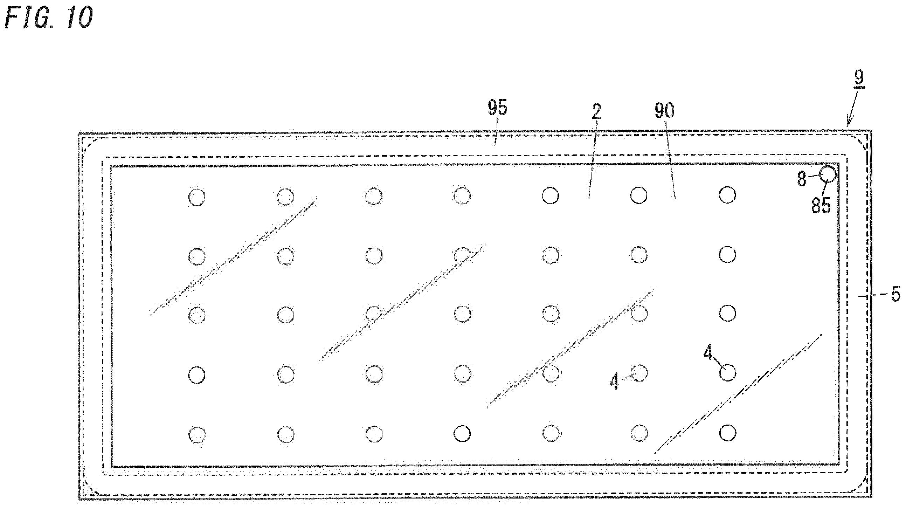

The glass window 9 shown in FIG. 10 includes the glass panel unit 90 manufactured by the first manufacturing method and a frame 95. The glass window 9 may be used in various applications. For example, the glass window 9 may be used as a show window.

The glass window 9 has a structure in which the glass panel unit 90 having a rectangular shape in a plan view is fitted into the rectangular frame 95, and exhibits excellent thermal insulation properties. In a front view (i.e., when the glass window 9 is viewed in the thickness direction), the sealing material 5 of the glass panel unit 90 will be hidden behind the frame 95. In addition, the evacuation ports 8 of the glass panel unit 90 and the sealing material 85 closing the evacuation ports 8 may also be located to be hidden behind the frame 95 in a front view.

A method for manufacturing the glass window 9 includes the steps of: manufacturing a glass panel unit 90 by the first manufacturing method; and fitting the glass panel unit 90 into the frame 95.

Note that the glass panel unit to be fitted into the frame 95 does not have to be the glass panel unit 90 manufactured by the first manufacturing method. Alternatively, the glass panel unit 90A manufactured by the second manufacturing method or the glass panel unit 90B manufactured by the third manufacturing method may also be fitted into the frame 95. Even in any of these alternative embodiments, a glass window 9 with excellent thermal insulation properties is also obtained.

Note that embodiments of the glass panel unit manufacturing method and glass window manufacturing method described above with reference to the accompanying drawings are only examples of the present invention and should not be construed as limiting. Rather, those embodiments may naturally be readily modified, or combined, as appropriate in various manners depending on a design choice or any other factor.

### [Advantages of respective aspects]

As can be seen from the foregoing description of exemplary embodiments, a glass panel unit manufacturing method according to a first aspect includes a providing step, a pillar arrangement step, a bonding step, a sealing step, and a cutting step. The providing step includes providing a first substrate (1; 1A) and a second substrate (2; 2A). The first substrate (1; 1A) includes a first glass pane (100; 100A). The second substrate (2; 2A) includes a second glass pane (200; 200A) and has a smaller contour than the first substrate (1; 1A). The pillar arrangement step includes arranging a plurality of pillars (4) on the first substrate (1; 1A). The bonding step includes hermetically bonding peripheral edges of the second substrate (2; 2A) onto the first substrate (1; 1A) while arranging the second substrate (2; 2A) over the first substrate (1; 1A) and then interposing the plurality of pillars (4) between the second substrate (2; 2A) and the first substrate (1; 1A). The sealing step includes sealing up an internal space (SI) created between the second substrate (2; 2A) and the first substrate (1; 1A) while keeping the internal space (SI) evacuated. The cutting step includes cutting the first substrate (1; 1A) to the contour of the second substrate (2; 2A).

In a glass panel unit manufacturing method according to the first aspect, glass panel units (90; 90A) of various sizes are obtained by using a first substrate (1; 1A) of a standardized size and subjecting the first substrate (1; 1A) to respective process steps. This allows glass panel units (90; 90A) of various sizes to be manufactured using the same equipment, thus cutting down the manufacturing cost. In addition, the cutting step requires cutting the first substrate (1; 1A) alone, thus facilitating the cutting work.

A glass panel unit manufacturing method according to a second aspect, which may be implemented in conjunction with the first aspect, has the following additional feature. Specifically, in the glass panel unit manufacturing method according to the second aspect, the second substrate (2; 2A) further includes a low-emissivity film (205; 205A).

A glass panel unit manufacturing method according to the second aspect improves the thermal insulation properties of the glass panel unit (90; 90A) manufactured. In addition, the low-emissivity film (205; 205A) is provided for the second substrate (2; 2A), not the first substrate (1; 1A) to be subjected to the cutting step. This facilitates the reuse of a redundant portion (13) that the first substrate (1; 1A) leaves after having been subjected to the cutting step.

A glass panel unit manufacturing method according to a third aspect, which may be implemented in conjunction with the first aspect, has the following additional feature. Specifically, in the glass panel unit manufacturing method according to the third aspect, the providing step includes providing a plurality of the second substrates (2A). The bonding step includes hermetically bonding peripheral edges of each of the plurality of the second substrates (2A) onto the first substrate (1A) while arranging the plurality of the second substrates (2A) side by side over the first substrate (1A) and then interposing some of the plurality of pillars (4), arranged on the first substrate (1A), between each of the plurality of the second substrates (2A) and the first substrate (1A). The sealing step includes sealing up an internal space (SI) created between each of the plurality of the second substrates (2A) and the first substrate (1A) while keeping the internal space (S1) evacuated. The cutting step includes cutting the first substrate (1A) to the respective contours of the plurality of the second substrates (2A).

In a glass panel unit manufacturing method according to the third aspect, multiple glass panel units (90A) of various sizes may be manufactured simultaneously by using a first substrate (1A) of a standardized size and subjecting the first substrate (1A) to respective process steps. This cuts down the manufacturing cost by using the same equipment in common. In addition, the cutting step requires cutting the first substrate (1A) alone, thus facilitating the cutting work.

A glass panel unit manufacturing method according to a fourth aspect, which may be implemented in conjunction with the third aspect, has the following additional feature. Specifically, in the glass panel unit manufacturing method according to the fourth aspect, at least one of the plurality of the second substrates (2A) further includes a low-emissivity film (205A).

A glass panel unit manufacturing method according to the fourth aspect improves the thermal insulation properties of at least one of the glass panel units (90A) manufactured. In addition, the low-emissivity film (205A) is provided for the second substrate (2A), not the first substrate (1A) to be subjected to the cutting step. This facilitates the reuse of redundant portions that the first substrate (1A) may leave after having been subjected to the cutting step.

A glass panel unit manufacturing method according to a fifth aspect, which may be implemented in conjunction with any one of the first to fourth aspects, has the following additional feature. Specifically, the glass panel unit manufacturing method according to the fifth aspect further includes a second bonding step. The second bonding step includes hermetically bonding a third substrate (3), including a third glass pane (300), onto either the first substrate (1; 1A) or the second substrate (2; 2A) with a sealing material (52) in a frame shape.

A glass panel unit manufacturing method according to the fifth aspect further improves the thermal insulation properties of the glass panel unit (90B) manufactured.

As can be seen from the foregoing description of exemplary embodiments, a glass window manufacturing method according to a sixth aspect has the following additional feature. Specifically, the glass window manufacturing method according to the sixth aspect includes the steps of: manufacturing a glass panel unit (90; 90A; 90B) by the glass panel unit manufacturing method of any one of the first to fifth aspects; and fitting the glass panel unit (90; 90A; 90B) into a frame (95).

A glass window manufacturing method according to the sixth aspect allows a glass window (9) with excellent thermal insulation properties to be manufactured with the manufacturing cost cut down.

### Reference Signs List

- 1, 1A: First Substrate
- 100, 100A: First Glass Pane
- 2, 2A: Second Substrate
- 200, 200A: Second Glass Pane
- 205, 205A: Low-Emissivity Film
- 3: Third Substrate
- 300: Third Glass Pane
- 4: Pillar
- 52: Sealing Material
- 9: Glass Window
- 90, 90A, 90B: Glass panel unit
- 95: Frame
- S1: Internal Space

## Claims

1. A glass panel unit manufacturing method comprising:
a providing step of providing a first substrate and a second substrate, the first substrate including a first glass pane, the second substrate including a second glass pane;
a pillar arrangement step of arranging a plurality of pillars on the first substrate;
a bonding step of hermetically bonding peripheral edges of the second substrate onto the first substrate while arranging the second substrate over the first substrate and then interposing the plurality of pillars between the second substrate and the first substrate;
a sealing step of sealing up an internal space created between the second substrate and the first substrate, while keeping the internal space evacuated; **characterised in that** the second substrate has a smaller contour than the first substrate and **in that** the method further comprises
a cutting step of cutting the first substrate to the contour of the second substrate.

2. The glass panel unit manufacturing method of claim 1, wherein
the second substrate further includes a low-emissivity film.

3. The glass panel unit manufacturing method of claim 1, wherein
the providing step includes providing a plurality of the second substrates,
the bonding step includes hermetically bonding peripheral edges of each of the plurality of the second substrates onto the first substrate while arranging the plurality of the second substrates side by side over the first substrate and then interposing some of the plurality of pillars,
arranged on the first substrate, between each of the plurality of the second substrates and the first substrate,
the sealing step includes sealing up an internal space created between each of the plurality of the second substrates and the first substrate, while keeping the internal space evacuated, and
the cutting step includes cutting the first substrate to the respective contours of the plurality of the second substrates.

4. The glass panel unit manufacturing method of claim 3, wherein
at least one of the plurality of the second substrates further includes a low-emissivity film.

5. The glass panel unit manufacturing method of any one of claims 1 to 4, further comprising a second bonding step of hermetically bonding a third substrate, including a third glass pane, onto either the first substrate or the second substrate with a sealing material in a frame shape.

6. A glass window manufacturing method comprising the steps of:
manufacturing a glass panel unit by the glass panel unit manufacturing method of any one of claims 1 to 5; and
fitting the glass panel unit into a frame.

## Patentansprüche

1. Glasscheibeneinheit-Herstellungsverfahren, umfassend:
einen Bereitstellungsschritt des Bereitstellens eines ersten Substrats und eines zweiten Substrats, wobei das erste Substrat eine erste Glasscheibe enthält, das zweite Substrat eine zweite Glasscheibe enthält;
einen Säulenanordnungsschritt des Anordnens einer Mehrzahl von Säulen auf bzw. an dem ersten Substrat;
einen Verbindungsschritt des hermetischen Bondens von Umfangskanten bzw. -rändern des zweiten Substrats auf das erste Substrat, während das zweite Substrat über dem ersten Substrat angeordnet wird und dann die Mehrzahl von Säulen zwischen dem zweiten Substrat und dem ersten Substrat angeordnet werden;
einen Abdichtungsschritt des Abdichtens eines zwischen dem zweiten Substrat und dem ersten Substrat erzeugten Innenraums, während der Innenraum evakuiert bzw. luftleer bleibt;
**dadurch gekennzeichnet, dass** das zweite Substrat eine kleinere Kontur als das erste Substrat aufweist und dass das Verfahren ferner einen Schneidschritt des Schneidens des ersten Substrats auf die Kontur des zweiten Substrats umfasst.

2. Glasscheibeneinheit-Herstellungsverfahren nach Anspruch 1, wobei das zweite Substrat ferner einen Film mit geringem Emissionsvermögen enthält.

3. Glasscheibeneinheit-Herstellungsverfahren nach Anspruch 1, wobei
der Bereitstellungsschritt ein Bereitstellen einer Mehrzahl der zweiten Substrate beinhaltet,
der Verbindungsschritt ein hermetisches Bonden von Umfangskanten jeder der Mehrzahl zweiter Substrate auf das erste Substrat beinhaltet, während die Mehrzahl zweiter Substrate Seite an Seite über dem ersten Substrat angeordnet werden und dann einige der Mehrzahl von Säulen, die auf dem ersten Substrat angeordnet sind, zwischen jedem der Mehrzahl zweiter Substrate und dem ersten Substrat angeordnet werden,
der Abdichtungsschritt ein Abdichten eines Innenraums beinhaltet, der zwischen jedem der Mehrzahl zweiter Substrate und dem ersten Substrat erzeugt wird, während der Innenraum evakuiert bzw. luftleer bleibt, und
der Schneideschritt ein Schneiden des ersten Substrats auf die jeweiligen Konturen der Mehrzahl zweiter Substrate beinhaltet.

4. Glasscheibeneinheit-Herstellungsverfahren nach Anspruch 3, wobei zumindest eines der Mehrzahl zweiter Substrate ferner einen Film mit geringem Emissionsvermögen enthält.

5. Glasscheibeneinheit-Herstellungsverfahren nach einem der Ansprüche 1 bis 4, ferner umfassend einen zweiten Verbindungsschritt des hermetischen Bondens eines dritten Substrats, einschließlich einer dritten Glasscheibe, entweder auf das erste Substrat oder das zweite Substrat mit einem Dichtungsmaterial in eine Rahmenform.

6. Glasfenster-Herstellungsverfahren, umfassend die Schritte:
Herstellen einer Glasscheibeneinheit durch das Glasscheibeneinheit-Herstellungsverfahren nach einem der Ansprüche 1 bis 5; und
Einpassen der Glasscheibe in einen Rahmen.

## Revendications

1. Procédé de fabrication d'une unité de panneau de verre comprenant :
une étape de fourniture consistant à fournir un premier substrat et un deuxième substrat, le premier substrat incluant une première vitre, le deuxième substrat incluant une deuxième vitre ;
une étape d'agencement de colonnes consistant à agencer une pluralité de colonnes sur le premier substrat ;
une étape d'assemblage consistant à assembler hermétiquement des bords périphériques du deuxième substrat sur le premier substrat tout en agençant le deuxième substrat sur le premier substrat, puis interposer la pluralité de colonnes entre le deuxième substrat et le premier substrat ;
une étape d'étanchéification consistant à étanchéifier un espace interne créé entre le deuxième substrat et le premier substrat tout en maintenant l'espace interne évacué ; **caractérisé en ce que**
le deuxième substrat a un contour plus petit que le premier substrat et **en ce que** le procédé comprend en outre
une étape de découpe consistant à découper le premier substrat sur le contour du deuxième substrat.

2. Procédé de fabrication d'une unité de panneau de verre selon la revendication 1, dans lequel
le deuxième substrat inclut en outre un film à faible émissivité.

3. Procédé de fabrication d'une unité de panneau de verre selon la revendication 1, dans lequel
l'étape de fourniture inclut fournir une pluralité des deuxièmes substrats,
l'étape d'assemblage inclut assembler hermétiquement des bords périphériques de chacun de la pluralité des deuxièmes substrats sur le premier substrat tout en agençant la pluralité des deuxièmes substrats côte à côte sur le premier substrat, puis interposer certaines de la pluralité de colonnes, agencées sur le premier substrat, entre chacun de la pluralité des deuxièmes substrats et le premier substrat,
l'étape d'étanchéification inclut étanchéifier un espace interne créé entre chacun de la pluralité des deuxièmes substrats et le premier substrat tout en maintenant l'espace interne évacué, et
l'étape de découpe inclut découper le premier substrat sur les contours respectifs de la pluralité des deuxièmes substrats.

4. Procédé de fabrication d'une unité de panneau de verre selon la revendication 3, dans lequel
au moins un de la pluralité des deuxièmes substrats inclut un film à faible émissivité.

5. Procédé de fabrication d'une unité de panneau de verre selon l'une quelconque des revendications 1 à 4, comprenant en outre une seconde étape d'assemblage consistant à assembler hermétiquement un troisième substrat, incluant une troisième vitre, sur le premier substrat ou le deuxième substrat avec un matériau d'étanchéification dans une forme de cadre.

6. Procédé de fabrication d'une fenêtre comprenant les étapes consistant à :
fabriquer une unité de panneau de verre par le procédé de fabrication d'une unité de panneau de verre selon l'une quelconque des revendications 1 à 5 ; et
ajuster l'unité de panneau de verre dans un châssis.
